# EUROPEAN PATENT SPECIFICATION

(11) **EP 0 880 293 B1**
(45) Date of publication and mention of the grant of the patent: **28.09.2005**
(21) Application number: 97201550.7
(22) Date of filing: 23.05.1997
(51) Int. Cl.: H04Q 7/06, H04N 7/088, H04N 7/035, H04Q 7/22

(54) **Mobile communication system, mobile communication device and method of transmiting call requests and longer messages**
Mobiles Kommunikationssystem, mobiles Kommunikationsgerät und Verfahren zur Übertragung von Rückrufanfragen und längeren Mitteilungen
Système de communication mobile, dispositif de communication mobile et procédé pour la transmission d'appels et de longs messages

(43) Date of publication of application: 25.11.1998
(73) Proprietor: Koninklijke KPN N.V., 9726 AE Groningen (NL)
(72) Inventor: Boot, Adriaan Johan, 2264 XZ Leidschendam (NL)

(56) References cited:
- EP-A- 0 396 186
- WO-A-93/20654
- GB-A- 2 185 361
- GB-A- 2 294 608
- US-A- 4 890 321
- CHAMBERS J P: "BBC DATACAST - THE TRANSMISSION SYSTEM" ELECTRONICS & WIRELESS WORLD, vol. 92, no. 1609, November 1986, pages 95-98, XP002019797

## Description

### Background of the invention

The present invention relates to a mobile communication system comprising call transmission means for, on request of a first party, transmitting a call signal to a mobile communication device of a second party. Such a mobile communication system is generally known and is for example a one-way communication system such as a paging system or a two- way communication system, such as a system working according to a GSM-standard.

In the case that the mobile communication system is a paging system it works as follows: A first party wishing, that a second party is called, calls the paging system by telephone. The first party identifies the mobile communication device, which in this case is a paging device, of the second party to be called. The paging system thereupon transmits a call signal, which also is called a paging signal, comprising identification data, identifying the paging device of the second party. The paging device of the second party receives the paging signal, checks the identification data, and if this identification data corresponds to the paging device, a sound generator is activated, generating a sound, such as a beep or a ring. Upon hearing the sound the second party knows that, a paging signal has been received by his paging device. Due to the fact, that paging devices normally are only equipped for receiving paging signals and not for having normal telephone conversations, the second party does not have any information about the reason for sending the paging signal. In order to obtain this information the second party, usually has to make a normal telephone call with the first party, responsible for the transmission of the paging signal. Thereto he has to find a normal telephone near the place where he finds himself at the moment of receiving the paging signal.

In more sophisticated paging systems, a message for the second party may be added to the paging signal. This message is shown by the paging device of the second party, by means of a display. However, due to the fact that, generally the size of this display is limited, only short messages can be sent to the second party. These messages normally are not long enough to inform the second party fully about the reason for sending the paging signal.

In the case that the mobile communication system is two-way communication system, such as a GSM-system a first party wishing to call a second party, using his mobile communication device, can place a normal telephone call, to the mobile communication device of the second party, which enables the two parties to talk. Alternatively, the first party can call the second party by sending a call signal to the mobile communication device of the second party, according to a Short Message Service (SMS). Such a call signal according to a Short Message Service comprises a message of a limited size and therefore suffers from the same drawback as the paging signal, as described above.

Teletext is data carried on otherwise unused lines in a television field-blanking interval of a television signal. A process to transmit data-lines which are independent of a normal teletext system, but similar to that used in the teletext system is known from Chambers, J.P., "BBC Datacast - the transmission system", EBU Rev. Tech. (Belgium), no. 222, pages 80-89, April 1987. According to Chambers unused data channels in the data-lines can be used regardless of the content of the teletext service without interfering with normal teletext decoder operating according to the teletext specification. For example datacast can be added to a video signal. The datacast signal can be added at a different point to the video signal of where the teletext signal originates.

EP0396186 describes a data distribution system for distributing data via information free zones in a television signal - to be transmitted to more than one receiver by a terrestrial or an extraterrestrial transmitter - comprising an insertion device for inserting the data to be distributed into the information free zones of the television signal, collection means for the collection and control of data presented to these collection means by various data suppliers and transmission means for the transmission of the collected data to the insertion device. The collection means are formed by a public electronic mail system, comprising a plurality of electronic mailboxes, accessible to users, for introducing, reading out or mutating messages, each of the data suppliers introducing its data to be distributed as a message into a mailbox. The transmission means are formed by a transmission device, which, on the one hand, keeps up, as a user of the electronic mail system, a periodic or a permanent connection with that certain mailbox of the electronic mail system, the messages in that mailbox being read out, and which, on the other hand, is connected to the insertion device, the read-out contents of the mailbox being transmitted to the insertion device.

### Summary of the invention:

It is therefore an object of the present invention to provide a mobile communication system, enabling the first party to send longer messages to the second party, than possible in the prior art mobile communication systems.

Thereto the mobile communication system according to the invention is characterized in that, the mobile communication system further comprises message insertion means for inserting, in conjunction with the call signal, a message into a TV-signal according to a teletext standard and in that the call transmission means are designed for inserting a message code into the call signal, indicating the existence of the message on teletext.

The mobile communication system according to the invention makes it possible that in conjunction with the call signal, a message is sent to teletext. The second party can be informed, that a message for him is present on teletext. The second party can read the message using any TV-receiver with teletext decoder, available near the place where the second party finds himself, at the moment of the call. The content of the message, which is to be determined by the first party, can comprise the reason of the call, instructions what to do, etc. Due to the fact that teletext is used, long messages can be sent to the second party.

A further embodiment of the mobile communication system according to the invention is characterized in that, the call transmission means are designed for inserting data relating to the TV-channel and the teletext page, on which the message is present, into the call signal. In this way the second party is informed exactly, where to find the message.

A still further embodiment of the mobile communication system according to the invention is characterized in that, the mobile communication system comprises a service providing arrangement and in that the message insertion means are designed for inserting the message into a TV-signal according to a teletext standard, only after a request thereto from the second party has been received by the service providing arrangement. In this embodiment, the message is only sent to teletext, if the second party approves.

The present invention further relates to a mobile communication device comprising receiving means for receiving a call signal from a mobile communication system, control means and indication means for indicating that a call signal has been received. Such a mobile communication device is for example a paging device, if the mobile communication system is a paging system or a GSM-terminal, if the mobile communication system is a system, working according the GSM-standard. According to the invention the mobile communication device is characterized in that, the control means are designed for sending an instruction command to the indication means to indicate the presence of a message code in the call signal, the message code being indicative of the existence of a message on teletext, in conjunction with the call signal. The indication means may be formed by audio means, such as a sound generator or visual means, such as a small display or a combination of the two. The presence of the message code in the received call signal and therefore also the presence of a message on teletext can be indicated for example by a sound different from the sound generated when there is no message present, in case that the indication means are audio means or, in the case that the mobile communication device comprises a display, by an indication on the display, for example the word "teletext".

An embodiment of the mobile communication device according to the present invention, is characterized in that, the control means are designed for sending a further instruction command to the indication means for indicating data in the call signal, relating to the TV-channel and the teletext page, on which the message is present. In this way the party to which the mobile communication device belongs is exactly informed, where the message is to be found.

The present invention also relates to a method of, on request of a first party, transmitting a call signal to a mobile communication device of a second party. Such a method can be applied in for example a paging system or a mobile communication system, working according to a GSM-standard. According to the invention the method is characterized by the insertion of a message, in conjunction with the call signal, into a TV-signal according to a teletext standard and by the insertion of a message code into the call signal, indicating the existence of the message on teletext.

### Brief description of the drawings

The invention will be further explained with reference to the accompanying drawing, in which
figure 1 shows a first embodiment of the mobile communication system according to the present invention
figure 2 shows a second embodiment of the mobile communication system according to the present invention
figure 3 shows a call signal used in the mobile communication system according to the present invention,
figure 4 shows a mobile communication device for use with the mobile communication system according to the present invention,
figure 5 shows a part of the first embodiment of the mobile communication system in more detail,
figure 6 shows a part of the second embodiment of the mobile communication system in more detail, and
figure 7 shows a flow chart of steps carried out in the first embodiment of the mobile communication system.

Throughout the drawings similar reference signs denote similar parts.

### Exemplary embodiments

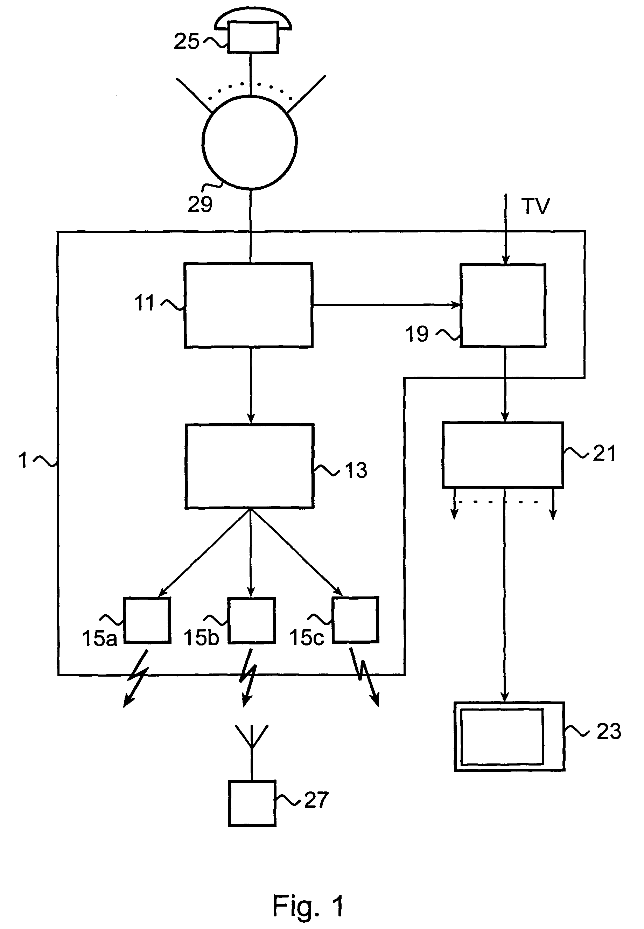

In figure 1 a mobile communication system 1 according to the present invention is shown. The mobile communication system 1 is for example a one-way communication system, such as a paging system or a two-way communication system, such as a mobile communication system working according to the GSM-standard. The invention will be explained with reference to a paging system. It must however be understood, that the invention is equally well applicable in for example a GSM-system, in which a first party is enabled to send a call signal to a second party, according to a Short Message Service (SMS).

The paging system 1 comprises a service providing arrangement 11, call transmission means 13, which will be further referred to as paging transmission means, paging base stations 15a,15b,15c, and message insertion means 19. The message insertion means 19 are equipped for inserting messages into information free zones of a TV-signal, which is to be broadcasted, according to a teletext standard such as the CCIR Teletext standard B. The message insertion means 19 are coupled to TV-signal broadcasting means 21, for broadcasting the TV-signal to a large number of television receivers 23 (for convenience only one of them is shown). The paging system 1 is further coupled to a Public Switched Telephony Network (PSTN) 29. To the PSTN 29 a large number of telephone sets 25 may be coupled (for convenience only one of them is shown). Furthermore mobile communication devices 27 are present, which will be further referred to as paging devices (for convenience again only one of them is shown), which are equipped for receiving call signals, which will be further referred to as paging signals, coming from the paging system 1.

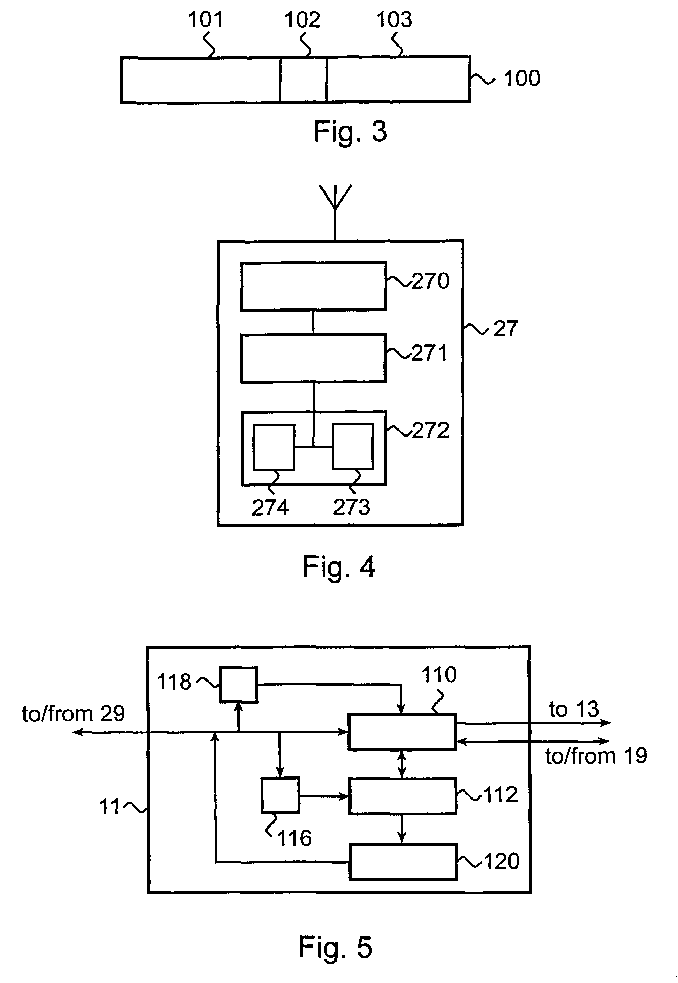

A first party in the possession of a telephone set 25, wishing a second party to be called, calls the service providing arrangement 11, by dialling a predetermined telephone number, corresponding thereto. The service providing arrangement 11 is shown in more detail in figure 5. It comprises a processor 110, a memory 112, speech recognition means 116, Dual Tone Multiple Frequency (DTMF) receiving means 118 and speech generation means 120. In the memory 112 a number of voice messages is recorded. When a call comes in, the speech generation means 120 send spoken questions to the calling party, based upon the recorded voice messages. The calling party must answer the questions using DTMF-buttons on his telephone set. The DTMF-tones generated in this way by the calling party are received by the DTMF-receiving means 118. In dependence upon the answer giving by the user, the processor 110 decides what action has to be carried out next. Among the questions to be answered, there is at least the question what the number is of the paging device 27 to be called. If the calling party further indicates, that a message should be sent to teletext in conjunction with the paging signal the calling party is prompted to slowly say the message to be sent. This message is converted into data by the speech recognition means 116 and stored in the memory 112. Thereupon it is read out by the processor 110 and is sent to the message insertion means 19.

The message insertion means 19 are designed for inserting the message into a TV-signal, at places where there is no picture or sound information present in confirmation with a teletext standard, such as CCIR Teletext standard B. The message insertion means 19 may form part of a plurality of other paging systems according to the present invention (not shown). The TV-signal broadcasting means 21 broadcast the TV-signal to a great number of TV-receivers 23. The TV-signal broadcasting means 21 can be of any suitable type. The message insertion means 19 may be coupled by data lines to various other sources of teletext messages. A more detailed description of a teletext system can be found in the article "BBC Datacast" of J.P. Chambers, EBU Rev. Tech. (Belgium), no. 222, pages 80-89, April 1987.

The processor 110 further is designed to send an instruction command to the paging transmission means 13 to transmit a paging signal 100 to the paging device 27. The data format of the paging signal 100, sent by the paging transmission means 13, is shown in figure 3. A first data field 101 comprises the identification number of the paging device for which the paging signal is meant. A second data field 102 comprises a message code, that a message has been sent to teletext in conjunction with the paging signal. A third data field 103 comprises data relating to the TV-channel and teletext page to which the message has been sent. The message insertion means 19 send these data to the processor 110 after having inserted the message. Furthermore the paging signal 100 may have a further field (not shown), comprising a short message, which is to be displayed by the paging device 27. The paging transmission means 13 transmit the paging signal to the paging device 27 via a number of base stations 15a,15b,15c, each one of them covering a certain area.

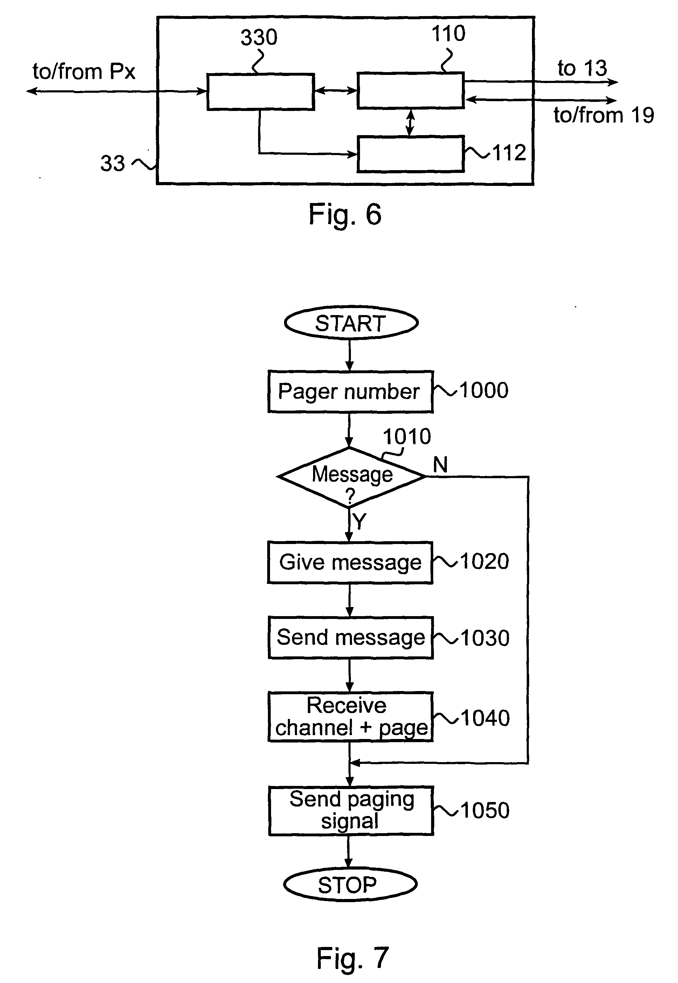

In figure 7 a flow chart is shown of the steps taken by the paging system 1 when receiving a telephone call. The meaning of the indicated steps is indicated in the table below.

| STEP: | MEANING: |
|---|---|
| 1000 | PAGING DEVICE NUMBER |
| 1010 | MESSAGE TO TELETEXT? |
| 1020 | GIVE MESSAGE |
| 1030 | SEND MESSAGE |
| 1040 | RECEIVE CHANNEL + PAGE |
| 1050 | SEND PAGING SIGNAL |

In step 1000 the calling party is prompted to indicate the number of the paging device to be called. This can be done by directing a spoken question to him by the speech generation means 120. The calling party has to answer the question, using the buttons on his telephone set. The number is stored in the memory 112. In step 1010 the calling party is asked, if he wants a message to be sent to teletext and also instructed how to answer the question. This can be done by directing the following lines to him by the speech generation means: "Do you want a message to be sent to teletext? If yes, press button 1, if no press button 2". By pressing button 1 or button 2 the calling party makes his selection. If the calling party wants a message to be sent to teletext, the next step is step 1020. In this step the user is prompted to slowly say the message to be sent. This spoken message is recognized by the speech recognition means 116, converted into data and stored in the memory 112. In step 1030, the message is read out of the memory 112 by the processor 110 and sent to the message insertion means 19. The processor 110 also sends a request to the message insertion means 19 to return data about the TV-channel and the teletext page to which the message has been sent. In step 1040, the data relating thereto are received by the processor 110. In step 1050 the processor instructs the paging transmission means 13 to transmit a paging signal to the paging device 27. The instruction comprises at least the paging device number of the paging device for which the paging signal is meant. If a message has been sent to teletext also a message code should be present in data field 102. If also data about the TV-channel and teletext page to which the message has been sent, have been received by the processor 110, these data should be added to data field 103.

In figure 4 a paging device 27 for use with the paging system 1 is schematically shown. Only those parts of the paging device 27, which are relevant for understanding the present invention are shown. The paging device comprises, receiving means 270, pager control means 271, and indication means 272, consisting of audio means, for example a sound generator 273 and visual means, for example a display 274. When a paging signal 100 is received by the receiving means 270, the pager control means 271 check if the identification number in the first data field 101 belongs to the paging device. If this is true, the received paging signal is directed to the paging device 27. In this case the pager control means 271 instruct the sound generator 273 to generate a sound, such as a ring or a beep in order to alert the party to which the paging device 27 belongs. Thereupon the pager control means 271 check the content of data fields 102 and 103. If a message code is present in data field 102, indicating that a message has been sent to teletext, the pager control means 271 send an instruction command to the display means 274 to display this information (for example the word "teletext"). If data relating to the TV-channel and the teletext page to which the message has been sent are present in data field 103, the pager control means 271 send a further instruction command to the display means 274 to display also these data.

So, with the paging system according to the invention the second party can read the message which has been sent to him by the first party, using a TV-receiver 23 having a teletext decoder.

Of course modifications can be made to the embodiment of the paging system, shown in figure 1. For example, a human operator may take over the function of the speech recognition means 116. The operator types the message dictated by the first party, which is stored in the memory 112 and as soon as completed, it is sent to the message insertion means 19. Another possibility is for example, to leave the data field 103 of the paging signal empty, and storing the channel and the teletext page on which the message is present in the memory 112. The second party then has to call the service providing arrangement 11 in order to be informed about the channel and the teletext page where the message is present. Still another possibility is the storage of the message in the memory 112 of the service providing arrangement 11 and sending a message code in data field 102, that there is a message for the party, which has received the paging signal. In order to let the message be transmitted to teletext, this party has to call the service providing arrangement 11 and requesting the transmission of the message to teletext. These modifications can be easily carried out by a person skilled in the art, making appropriate changes in the service providing arrangement 11.

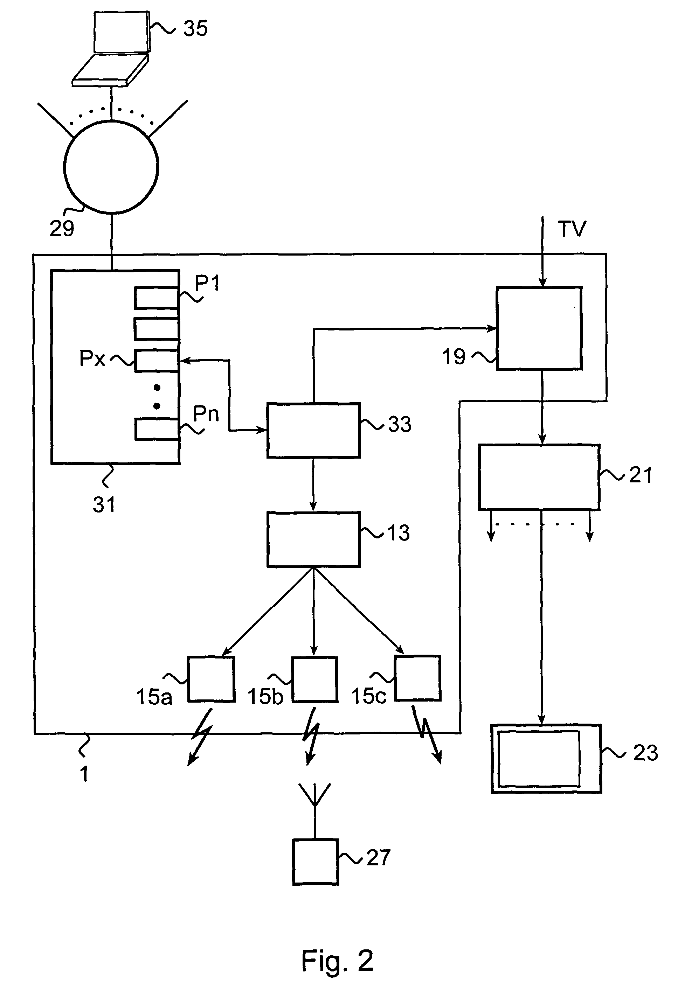

A second embodiment of the paging system 1 according to the present invention is shown in figure 2. Instead of a service providing arrangement 11, which should be called by telephone, the paging system 1 comprises a public electronic mail system 31, with amongst others a number of electronic mail boxes P1..Pn and system control means 33. The system control means 33 are shown in more detail in figure 6. They comprise E-mail read-out means 330, a processor 110 and a memory 112. The processor 110 and the memory 112 have the same functionality as the processor and the memory of the service providing arrangement 11 described with reference to figure 5. The E-mail read-out means 330, which keep up as a user of the public electronic mail system 31 are equipped for checking the incoming messages of the electronic mailbox Px. By sending an E-mail message to the electronic mailbox Px a first party having computer equipment 35 for sending electronic mail is enabled to instruct the paging system 1 to send a paging signal to a second party and to send a message to teletext. The E-mail message thereto should comprise the number of the paging device to be called and also the message to be sent to teletext. The message to be sent to teletext is sent to the message insertion means 19 by processor 110. Subsequently the processor sends an instruction command to the paging transmission means 13 for transmitting the paging signal. This is done in the same way, as already described with reference to figure 5 and figure 7.

The embodiments of the present invention described herein are intended to be taken in an illustrative and not a limiting sense. Various modifications may be made to these embodiments by persons skilled in the art without departing from the scope of the present invention as defined in the claims. As already mentioned the present invention can also be applied in a mobile communication system, suitable for two-way communication, such as a mobile communication system working according to the GSM-standard. In such a GSM-system a first party having a mobile communication device, working according to the GSM-standard, can send a call signal to a second party having a mobile communication device working according to the GSM-standard, using Short Message Service (SMS). In order to enable the first party to send a message to teletext in conjunction with the call signal, a prior art GSM-system should be extended with service providing means and with message insertion means for inserting the message into a TV-signal according to a teletext standard. These means have been disclosed with reference to the paging system. Furthermore the GSM-terminal of the second party can optionally be extended with control means and indication means for indicating the existence of the message on teletext and indicating the TV-channel and the teletext page on which the message is present.

## Claims

1. Mobile communication system (1) comprising call transmission means (13) for, on request of a first party, transmitting a call signal (100) to a mobile communication device (27) of a second party, **characterized in that** the mobile communication system (1) further comprises message insertion means (19) for inserting, in conjunction with the call signal (100), a message into a TV-signal (TV) according to a teletext standard and **in that** the call transmission means (13) are designed for inserting a message code (102) into the call signal (100), indicating the existence of the message on teletext.

2. Mobile communication system (1) according to claim 1, **characterized in that** the call transmission means (13) are designed for inserting data (103) relating to the TV-channel and the teletext page, on which the message is present, into the call signal (100).

3. Mobile communication system (1) according to one of the preceding claims, **characterized in that** the mobile communication system (1) comprises a service providing arrangement (11) and **in that** the message insertion means (19) are designed for inserting the message into a TV-signal (TV) according to a teletext standard, only after a request thereto from the second party has been received by the service providing arrangement (11).

4. Mobile communication device (27) comprising receiving means (270) for receiving a call signal (100) from a mobile communication system (1), control means (271) and indication means (272) for indicating that a call signal (100) has been received, **characterized in that** the control means (271) are designed for sending an instruction command to the indication means (272) to indicate the presence of a message code (102) in the call signal (100), the message code (102) being indicative of the existence of a message on teletext, in conjunction with the call signal (100).

5. Mobile communication device (27) according to claim 4, **characterized in that** the control means (271) are designed for sending a further instruction command to the indication means (272) for indicating data (103) in the call signal (100), relating to the TV-channel and the teletext page, on which the message is present.

6. Method of, on request of a first party, transmitting a call signal (100) to a mobile communication device (27) of a second party, **characterized by** the insertion of a message, in conjunction with the call signal (100), into a TV-signal according to a teletext standard and by the insertion of a message code (102) into the call signal (100), indicating the existence of the message on teletext.

## Patentansprüche

1. Mobiles Kommunikationssystem (1) mit Anruf-Übertragungsmitteln (13), um auf Anforderung einer ersten Partei ein Anrufsignal (100) an eine mobile Kommunikationsvorrichtung (27) einer zweiten Partei zu übermitteln, **dadurch gekennzeichnet, dass** das mobile Kommunikationssystem (1) weiterhin Nachrichten-Einfügungsmittel (19) zum Einfügen, in Übereinstimmung mit dem Anrufsignal (100), einer Nachricht in ein Fernsehsignal (TV) gemäss einem Teletext-Standard umfasst, und dass die Anruf-Übertragungsmittel (13) so ausgestaltet sind, um einen Nachrichtencode (102) in das Anrufsignal (100) einzufügen, um auf das Bestehen der Nachricht im Teletext hinzuweisen.

2. Mobiles Kommunikationssystem (1) gemäss Anspruch 1, **dadurch gekennzeichnet, dass** die Anruf-Übertragungsmittel (13) so ausgestaltet sind, um Daten (103), die sich auf den Fernseh-Kanal und die Teletext-Seite beziehen, auf der die Nachricht vorhanden ist, in das Anrufsignal (100) einzufügen.

3. Mobiles Kommunikationssystem (1) gemäss einem der vorstehenden Ansprüche, **dadurch gekennzeichnet, dass** das mobile Kommunikationssystem (1) eine dienstleistende Anordnung (11) umfasst, und dass die Nachrichten-Einfügungsmittel (19) so ausgestaltet sind, um die Nachricht in ein Fernseh-Signal (TV) gemäss einem Teletext-Standard einzufügen, nur nachdem eine Aufforderung dafür von der zweiten Partei von der dienstleistenden Anordnung (11) empfangen worden ist.

4. Mobile Kommunikations-Vorrichtung (27) mit Empfangsmitteln (270) zum Empfang eines Anrufsignals (100) von einem mobilen Kommunikationssystem (1), mit Steuermitteln (271) und Hinweismitteln (272), um darauf hinzuweisen, dass ein Anrufsignal (100) empfangen worden ist, **dadurch gekennzeichnet, dass** die Steuermittel (271) so ausgestaltet sind, um einen Ausführungsbefehl an die Hinweismittel (272) zu senden, um auf das Vorhandensein eines Nachrichtencodes (102) in dem Anrufsignal (100) hinzuweisen, wobei der Nachrichtencode (102) auf das Bestehen einer Nachricht auf dem Teletext hinweisen kann, in Übereinstimmung mit dem Anrufsignal (100).

5. Mobile Kommunikationsvorrichtung (27) gemäss Anspruch 4, **dadurch gekennzeichnet, dass** die Steuermittel (271) so ausgestaltet sind, um einen weiteren Ausführungsbefehl an die Hinweismittel (272) zu senden, um auf Daten (103) in dem Anrufsignal (100) hinzuweisen, die sich auf den Fernsehkanal und die Teletext-Seite beziehen, auf der die Nachricht vorhanden ist.

6. Verfahren zur Übertragung eines Anrufsignals (100) auf eine mobile Kommunikationsvorrichtung (27) einer zweiten Partei von und auf Aufforderung einer ersten Partei, **gekennzeichnet durch** die Einfügung einer Nachricht in Übereinstimmung mit dem Anrufsignal (100) in ein Fernsehsignal gemäss einem Teletext-Standard und **durch** Einfügung eines Nachrichten-Codes (102) in das Anrufsignal (100), um auf das Bestehen der Nachricht im Teletext hinzuweisen.

## Revendications

1. Système de communication mobile (1) comprenant des moyens (13) de transmission d'appels pour transmettre, sur la demande d'une première partie, un signal d'appel (100) vers un dispositif de communication mobile (27) d'une seconde partie, **caractérisé en ce que** le système de communication mobile (1) comporte en outre des moyens (19) d'insertion de message pour insérer, en liaison avec le signal d'appel (100), un message dans un signal de télévision (TV) conformément à une norme de télétexte et **en ce que** les moyens (13) de transmission d'appels sont conçus pour l'insertion, dans le signal d'appel (100), d'un code de message (102) indiquant l'existence du message dans le télétexte.

2. Système de communication mobile (1) selon la revendication 1, **caractérisé en ce que** les moyens de transmission d'appels (13) sont conçus pour l'insertion de données (103) associées au canal de télévision et à la page de télétexte, sur laquelle le message est présent, dans le signal d'appel (100).

3. Système de communication mobile (1) selon l'une des revendications précédentes, **caractérisé en ce que** le système de communication mobile (1) comprend un dispositif (11) de prestation de services, **en ce que** les moyens (19) d'insertion de message sont conçus pour l'insertion du message dans un signal de télévision (TV) conformément à une norme de télétexte, uniquement après qu'une demande, qui lui est envoyée à partir de la seconde partie, a été reçue par le dispositif de prestation de services (11).

4. Dispositif de communication mobile (27) comprenant des moyens de réception (270) pour recevoir un signal d'appel (100) de la part d'un système de communication mobile (1), des moyens de commande (271) et des moyens d'indication (272) pour indiquer qu'un signal d'appel (100) a été reçu, **caractérisé en ce que** les moyens de commande (261) sont conçus pour l'envoi d'une commande d'instruction aux moyens d'indication (272) pour indiquer la présence d'un code de message (102) dans le signal d'appel (100), le code de message (102) étant indicatif de l'existence d'un message dans le télétexte, en liaison avec le signal d'appel (100).

5. Dispositif de communication mobile (27) selon la revendication 4, **caractérisé en ce que** les moyens de commande (271) sont conçus pour l'envoi d'une autre commande d'instruction aux moyens d'indication (272) pour indiquer des données (103) présentes dans le signal d'appel (100) et concernant le canal de télévision et la page de télétexte, dans lesquels le message est présent.

6. Procédé de transmission, sur la demande d'une première partie, d'un signal d'appel vers un dispositif de communication mobile (27) d'une seconde partie, **caractérisé par** l'insertion d'un message, en liaison avec le signal d'appel (100), dans un signal de télévision conformément à une norme de télétexte et par l'insertion, dans le signal d'appel (100), d'un code de message (102) indiquant l'existence du message dans le télétexte.
